# EUROPEAN PATENT APPLICATION

(11) **EP 2 184 207 A1**
(43) Date of publication of application: **12.05.2010**
(21) Application number: 08832801.8
(22) Date of filing: 11.09.2008
(51) Int. Cl.: B60R 16/02, B60K 35/00, G01D 11/28

(54) **METER DRIVING DEVICE**

(30) Priority: 24.09.2007 JP 2007246376
(71) Applicant: Nippon Seiki Co., Ltd., Nagaoka-shi, Niigata 940-8580 (JP)
(72) Inventor: The designation of the inventor has not yet been filed
(74) Representative: Jackson, Richard Eric
(86) International application number: PCT/JP2008/066373
(87) International publication number: WO 2009/041272

(57) **Abstract**

A meter driving apparatus is provided in which the display luminance of a plurality of placed meters can be adjusted in synchronization to enhance the appearance of the whole additional meter system. The driving apparatus is for a plurality of meters 2 and 3. The meters include the first meter (digital meter) 2 including an optical sensor 2d for detecting the surrounding brightness and having an auto-light-adjustment function of obtaining light-adjustment data for adjusting the display luminance of the meter 2 in accordance with the detection result of the optical sensor 2d and the second meter (analog data) 3 having no optical sensor. The driving apparatus has a control unit 1 which transmits the light-adjustment data obtained by the first meter 2 to the second meter. The second meter 3 adjusts the display luminance thereof based on the light-adjustment data received from the control unit 1.

## Description

### Technical Field

The present invention relates to a driving apparatus for a plurality of meters such as a tachometer, an intake pressure indicator, and an exhaust gas temperature indicator, provided independently of a combination meter for a vehicle.

### Background Art

Conventional meters include known meters called additional meters attached to a dashboard, an instrument panel or the like besides existing combination meters in which a speed meter, a tachometer, a thermometer, a fuel gage and the like are housed in a case body. The additional meters include, for example, a meter in which a single analog display portion is housed in a case and a meter or a light-emitting display is provided for displaying single vehicle information of a vehicle (for example, an engine RPM) to display the vehicle information in digital form. Such meters are often mounted on a racing car for running in a racing circuit, a vehicle provided with a supercharger or a turbocharger or the like. The types of those meters include a tachometer which monitors the engine RPM, an intake pressure indicator (boost gauge) which monitors the boost pressure of an engine, an exhaust gas temperature indicator which monitors the temperature of exhaust gas, an oil thermometer which monitors the temperature of engine oil, an oil pressure indicator which monitors the pressure of engine oil and the like.

The present applicant has proposed a meter driving apparatus disclosed in Patent Document 1 as a driving apparatus for a plurality of additional meters assumed to be placed. The meter driving apparatus proposed in Patent Document 1 includes an input port which can receive a plurality of status signals in accordance with vehicle information, has a single control unit which determines each of measurement data in accordance with the plurality of status signals, and uses serial data produced by the control unit to communicate between the control unit and each of the meters. Even when a plurality of meters are placed, the attachment operation thereof is simplified, and each of the meters can be installed without spoiling the appearance of the surroundings of a dashboard or an instrument panel.
Patent Document: JP-A-10-183523

### Disclosure of the Invention

### Problems that the Invention is to Solve

In the conventional additional meter and its driving apparatus, however, even when the plurality of meters are placed on the dashboard or the instrument panel, the display luminance of each meters is manually or automatically adjusted. Thus, the operation is complicated when the display luminance of the meter is manually adjusted. In addition, when the individual meters are automatically adjusted, a plurality of optical sensors should be provided to increase the manufacture cost, and the brightness detected by each optical sensor changes differently to require adjustment of the display luminance at different times among the individual meters, resulting in compromise of the appearance of the whole additional meter system.

In view of the foregoing problems, it is an object of the present invention to provide a meter driving apparatus obtained by further improving a driving apparatus for a plurality of additional meters assumed to be placed, in which the display luminance of the plurality of meters can be adjusted in synchronization to enhance the appearance of the whole additional meter system.

### Means for Solving the Problems

To solve the abovementioned problems, the present invention provides a driving apparatus for plurally installed meters **characterized in that** the meters include a first meter including an optical sensor for detecting the surrounding brightness and having an auto-light-adjustment function of obtaining light-adjustment data for adjusting the display luminance of the first meter in accordance with the detection result of the optical sensor and a second meter having no optical sensor, the deriving apparatus has a control unit which transmits the light-adjustment data obtained by the first meter to the second meter, and the second meter adjusts the display luminance thereof based on the light-adjustment data received from the control unit.

The driving apparatus is **characterized in that** the control unit is provided independently of each of the meters, receives a plurality of status signals indicating vehicle information, determines each measurement data of the vehicle information based on each of the status signals, converts each of the measurement data and the light-adjustment data into serial data, and transmits the serial data to each of the meters, and each of the meters receives the serial data and controls a display portion in accordance with the serial data.

The driving apparatus is **characterized in that** each of the meters includes setting means for setting a predetermined correction value for the light-adjustment data.

### Advantage of the Invention

The present invention relates to a driving apparatus for a plurality of meters such as a tachometer, an intake pressure indicator, and an exhaust gas temperature indicator, provided independently of a combination meter for a vehicle, in which the display luminance of a plurality of meters can be adjusted in synchronization to enhance the appearance of the whole additional meter system.

### Brief Description of the Drawings

[Fig. 1] A block diagram showing the structure of a meter driving apparatus according to an embodiment of the present invention.
[Fig. 2] A block diagram showing the structure of meters in the meter driving apparatus.

### Description of Reference Numerals and Signs

- 1: control unit
- 2: digital meter (first meter)
- 2a: control means
- 2b: light-emitting display (display portion)
- 2c: setting means
- 2d: optical sensor
- 3: analog meter
- 3a: control means
- 3b: display portion
- 3c: setting means

### Best Mode for Carrying Out the Invention

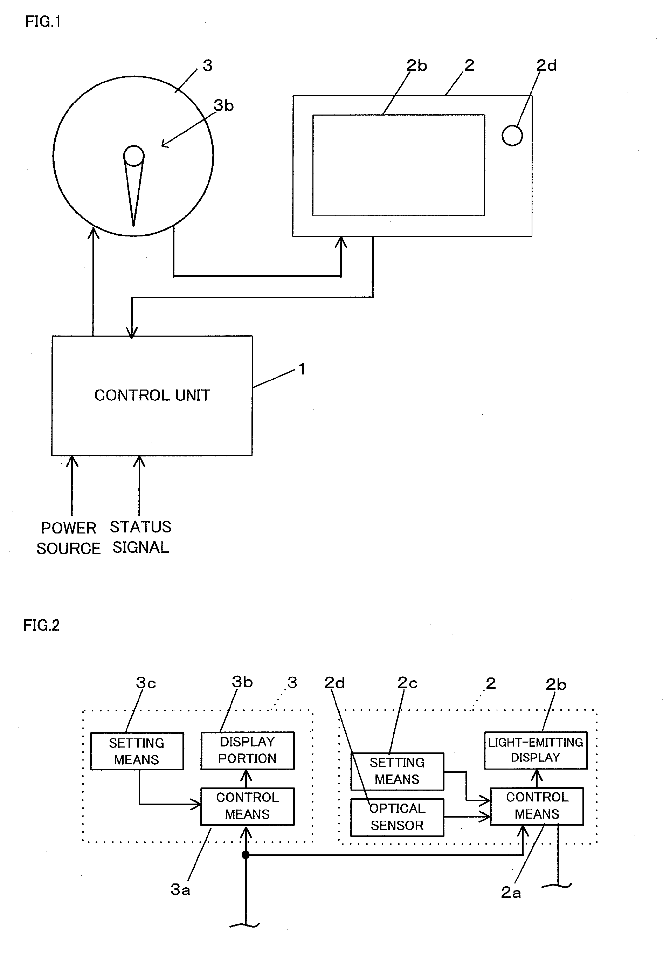

An embodiment of the present invention will hereinafter be described with reference to the accompanying drawings. The whole structure of a meter driving apparatus is described with reference to Figs. 1 and 2. As shown in Fig. 1, the meter driving apparatus is mainly formed of a control unit 1, a digital meter (first meter) 2, and an analog meter (second meter) 3.

The control unit 1 is implemented by a microcomputer and is formed of an A/D conversion portion which receives each status signal indicating vehicle information, a CPU which executes a predetermined processing operation program, a ROM which stores the processing operation program and the like, a RAM which temporarily stores data processed by the CPU and the like, a parallel/serial conversion portion (P/S conversion portion) which converts parallel data into serial data, a storage portion which is implemented by an EEPROM, a backup RAM or the like storing various settings in a non-volatile manner, a transmission portion which transmits the serial data in a predetermined cycle, and a reception portion which receives light-adjustment data, later described, from the digital meter 2. Upon reception of each of the status signals indicating the vehicle information, the control unit 1 executes predetermined computation processing in accordance with each of the status signals to calculate each measurement data of the vehicle information. In a normal operation mode, the control unit 1 also converts parallel data including a type code for identifying the type of a meter, each of the measurement data, and the light-adjustment data into serial data and transmits the serial data to control means, later described, of the digital meter 2 and the analog meter 3 through a wiring member 4. The digital meter 2 and the analog meter 3 are connected to each other through the wiring member including a multiplex transmission communication line for transferring the serial data from the control unit 1. In the present embodiment, the serial data from the control unit 1 is transmitted to the analog meter 3 and then to the digital meter 2 through the wiring member.

As shown in Fig. 2, the digital meter 2 is a meter of digital type which includes control means 2a, a light-emitting display (display) 2b implemented by an organic EL panel, a liquid crystal panel or the like, setting means 2c, and an optical sensor 2d, all of which are housed in a case body.

The control means 2a is implemented by a microcomputer and is provided for receiving the serial data transmitted by the control unit 1 and controlling the light-emitting display 2b based on the serial data. The control means 2a also receives a detection signal from the optical sensor 2d to find brightness data indicating the surrounding brightness and determines an output value of light-adjustment data for adjusting the display luminance of the light-emitting display 2b based on the brightness data, thereby providing an auto-light-adjustment function of automatically adjusting the display luminance of the light-emitting display 2b in accordance with the surrounding brightness. The control means 2a has a transmission portion for transmitting the light-adjustment data to the control unit 1.

The setting means 2c is implemented, for example by a DIP switch or a rotary switch, and is provided for outputting a predetermined setting signal to the control means 2a in accordance with a predetermined manipulation and setting a predetermined correction value for the light-adjustment data. A user can arbitrarily set a plurality of correction values by manipulating the setting means 2a. This is provided in order to allow changes in the light-adjustment characteristics of the display luminance in accordance with the installation position since the surroundings of the meter may be relatively bright or dark due to the influence of external light or the like depending on the position where the meter is installed. The setting methods of the correction value include setting an offset value to the light-adjustment data, changing the display luminance when the surroundings are dark with predetermined computation or the like.

As shown in Fig. 2, the analog meter 3 is a meter of analog type which includes control means 3a, an analog display portion 3b, and setting means 3c, all of which are housed in a case body.

The control means 3a is implemented by a microcomputer and is provided for receiving the serial data transmitted by the control unit 1 and controlling the display portion 3b based on the serial data. The control mean 3a also obtains, from the serial data, the light-adjustment data transmitted from the control means 2a of the digital meter 2 to the control unit 1 and controls an illumination means provided for the display portion 3b based on the light-adjustment data to adjust the display luminance of the display portion 3b.

The setting means 2c is implemented, for example by a DIP switch or a rotary switch, and is provided for outputting a predetermined setting signal to the control means 2a in accordance with a predetermined manipulation and setting a predetermined correction value for the light-adjustment data.

The foregoing respective portions constitute the meter driving apparatus.

In the meter driving apparatus which is the present embodiment, the light-adjustment data obtained by the digital meter 2 having the optical sensor 2d is transmitted to the other analog meter 3 having no optical sensor via the control unit 1 to perform the adjustment of the display luminance of the display portion 3b. Since the plurality of meters 2 and 3 adj ust the display luminance based on the same light-adj ustment data, the display luminance can be adjusted in synchronization to enhance the appearance of the whole additional meter system. In addition, since a plurality of optical sensors are not required, an increase in manufacture cost can be prevented.

The setting means 2c and 3c for setting the offset values to the light-adjustment data are provided for the digital meter 2 and the analog meter 3, respectively, which enables setting of the light-adjustment characteristics in accordance with the surrounding brightness depending on the installation positions of the meters 2 and 3, thereby achieving the adjustment in accordance with the individual surrounding environments while the adjustment operations are synchronized.

While the digital meter 2 has the optical sensor 2d in the present embodiment, the analog meter may have an optical sensor, or a plurality of first meters each having an optical sensor may be used. When the plurality of first meters each having an optical sensor are used, light-adjustment data obtained by one of them is transmitted to another meter (second meter) via the control unit to perform adjustment of the display luminance of each meter.

In the present embodiment, the control unit 1 provided independently of the meters 2 and 3 serves as a control unit which transmits the light-adjustment data to the analog meter 3 having no optical sensor. However, in the present invention, the control means contained in the first meter having the optical sensor may be used as the control unit such that the light-adjustment data is directly transmitted to another meter (second meter).

### Industrial Applicability

The present invention is preferable for a driving apparatus for a plurality of meters such as a tachometer, an intake pressure indicator, and an exhaust gas temperature indicator, provided independently of a combination meter for a vehicle.

## Claims

1. A driving apparatus for plurally installed meters, **characterized in that** the meters include a first meter including an optical sensor for detecting the surrounding brightness and having an auto-light-adjustment function of obtaining light-adjustment data for adjusting the display luminance of the first meter in accordance with the detection result of the optical sensor and a second meter having no optical sensor, the deriving apparatus has a control unit which transmits the light-adjustment data obtained by the first meter to the second meter, and the second meter adjusts the display luminance thereof based on the light-adjustment data received from the control unit.

2. The driving apparatus for the meters according to claim 1, **characterized in that** the control unit is provided independently of each of the meters, receives a plurality of status signals indicating vehicle information, determines each measurement data of the vehicle information based on each of the status signals, converts each of the measurement data and the light-adjustment data into serial data, and transmits the serial data to each of the meters, and each of the meters receives the serial data and controls a display portion in accordance with the serial data.

3. The driving apparatus for the meters according to claim 1, **characterized in that** each of the meters includes setting means for setting a predetermined correction value for the light-adjustment data.
